# EUROPEAN PATENT APPLICATION

(11) **EP 3 696 495 A1**
(43) Date of publication of application: **19.08.2020**
(21) Application number: 19156570.4
(22) Date of filing: 12.02.2019
(51) Int. Cl.: G01B 21/04, G01B 5/004, G01B 5/008, G01B 7/004, G01B 7/008, G01B 11/00

(54) **ROTATABLE SENSOR WITH LOCKING MECHANISM**

(71) Applicant: TAYLOR HOBSON LIMITED, Leicester LE4 9JQ (GB)
(72) Inventor: am Weg, Christian, 64289 Darmstadt (DE); Drabarek, Pawel, 75223 Tiefenbronn (DE)
(74) Representative: Weilnau, Carsten

(57) **Abstract**

A sensor arrangement (10) for measuring a surface or profile of an object (82), the sensor arrangement comprising:
- a base (12; 112) defining an axis of rotation (14)
- a probe head (20) attachable to the base (12; 112) or attached to the base (12; 112), wherein the probe head (20) is pivotable or rotationally movable relative to the base (12; 112) with regard to the axis of rotation (14),
- at least a first brake element (32, 34; 132, 134) movably arranged on the base (12; 112) or elastically deformable relative to the base (12; 112) between a release position and an engaging position, wherein when in the engaging position the brake element (32, 34; 132, 134) is engaged with the probe head (20) to block a rotation of the probe head (20) relative to the base (12; 112) and wherein the at least first brake element (32, 34; 132, 134) is movable or deformable between the release position and the engaging position in a radial direction with regards to the axis of rotation (14).

## Description

### Technical Field

The present disclosure relates in one aspect to the field of sensors for measuring a surface or profile of an object, wherein the sensor is rotatably or pivotally mounted on a measurement probe or on a base and wherein the sensor is lockable in at least one of a number of rotational positions relative to the probe or base. In another aspect the disclosure relates to a measuring device, e.g. implemented as a coordinate measuring device configured to measure a topology or surface of an object either by tactile or optical means. In another aspect, the disclosure relates to a method of measuring a surface or profile of an object.

### Background

There exist numerous types of shape or form measuring machines that are operable to measure a shape or a profile of an object. In principle, such measuring machines can be implemented either in a tactile or in a contactless manner. With some measuring machines a surface or profile of an object has to be scanned, either point-by-point or in accordance to a predefined pattern, such as an array or a spiral pattern. Typically, and for measuring the shape or contour of a surface of an object a probe head is directed towards a particular point on the surface and a distance between the probe head and the selected point is determined.

Such distance measuring steps are repeated for numerous points of the surface, such the surface is scanned point by point or line by line. For this, the probe head and the object have to be moved relative to each other. With some measuring machines and probe heads it is basically required that a sensor of the probe head is oriented at a predefined angle with regard to the surface normal of the point of the surface that has to be measured. Insofar and during a scanning measurement of the surface or profile of the object the probe head has to be rotated or pivoted from time-to-time.

For a rotary or pivoting movement of the probe head an electric drive and an optional gear must be provided in direct vicinity to the probe head. This is accompanied with a gain of weight of the probe head. In order to provide a required degree of precision for the movement of the probe head relative to the object respective moving stages, e.g. in form of linear translation stages or rotary stages must be adapted to carry the increased weight of the probe head. As a general rule, a gain in weight of the probe head is detrimental to the manufacturing costs and to the manufacturing or constructional expenditure required to enable a rather precise and fast movement of the probe head relative to the object.

Moreover, with commercially available rotary stages for a probe head there might be a lack of mechanical stability. Some measurements require that an angular position of the probe head should not or must change over a predefined time interval. Thus, it must be guaranteed, that the rotational position of the probe head is kept stationary and stable over a predefined measurement time interval. A self-locking gear operably connected to a drive configured for inducing a rotation or pivoting motion of the probe head may be generally sufficient to provide such a mechanical stability. But such self-locking gears are quite complex and expensive. Moreover, they would provide a remarkable contribution to the overall weight of the probe head.

It is therefore an object of the present development to provide a sensor arrangement comprising a rotatable or pivotable probe head that circumvents or avoids the disadvantages of the prior art. In particular, the probe head should be pivotable or rotatable relative to a base of the sensor arrangement. It should be kept stable in a selected or desired rotational position without the necessity to implement a self-locking gear. The sensor arrangement should be rather compact and lightweight. It should provide a high degree of mechanical stability, in particular with regard to the rotational position or rotational orientation of the probe head.

### Summary

In one aspect there is provided a sensor arrangement for measuring a surface or profile of an object. The sensor arrangement comprises a base defining an axis of rotation. The sensor arrangement further comprises a probe head that is attachable to the base or that is attached to the base. The probe head is pivotable or rotationally movable relative to the base with regard to the axis of rotation. The sensor arrangement further comprises at least a first brake element or a respective first locking element. The first brake element or a locking element is movably arranged on the base and relative to the base. Alternatively, the first brake element is elastically deformable relative to the base. In particular, the interconnection between the first brake element and the base might be elastically deformable so as to allow or to induce a respective pivoting or translating movement of the brake element relative to the base.

The first brake element is movable or elastically deformable relative to the base between a release position and an engaging position. When in the engaging position the brake element is engaged with the probe head to block a rotation of the probe head relative to the base. When in the engaging position the probe head is effectively locked to the base with regard to a rotation or pivoting motion on the axis of rotation. The at least first brake element is movable or deformable between the release position and the engaging position in a radial direction with regards to the axis of rotation. Typically, the at least first brake element is movable or deformable in the radial direction with regard to the axis of rotation.

Depending on the specific implementation the at least first brake element might be movable or deformable radially outwardly to engage with the probe head. In other embodiments the at least first brake element may be movable or deformable radially inwardly, i.e. towards the axis of rotation to engage with the probe head and to prevent a rotation of the probe head.

With the radial engagement and the radial motion of the at least first brake element an axial face of the probe head can be kept free of any brake elements and can be used for other functions of the sensor arrangement. In particular, the probe head may be interchangeably attachable to the base of the sensor arrangement. By providing a first brake element being exclusively movable or deformable in radial direction the probe head can be easily detached from the base along the axial direction if required.

This enables a modular implementation of the sensor arrangement. Hence, the sensor arrangement can be equipped with numerous differently configured probe heads. Here, the individual probe heads can be attached to the base along an attachment direction that extends substantially parallel to the axis of rotation. In this way a rather intuitive exchange of numerous probe heads to become attached to the base can be provided. For interchanging the probe head to and from the base the at least first brake element is typically in the release position. In this way and for interchanging the probe head there will be no interaction with the first brake element. Here, the at least first brake element does not impose any restrictions during the interchanging process.

In a further example the base comprises an electric drive and a rotary stage. The rotary stage comprises a mount for the probe head. The electric drive is operably connected to the rotary stage and is configured to rotate or to pivot the rotary stage relative to the base. The electric drive is configured to rotate the rotary stage with regard to the axis of rotation. At least one of the electric drive and the rotary stage typically comprises a gear or a gearbox. The gear or gearbox does not have to be implemented as a self-locking gear. Once a desired rotational position of the rotary stage and hence of the probe head has been reached, the at least first brake element can be activated to mechanically engage with the probe head thus ensuring that no further rotation of the probe head relative to the base occurs.

With some examples the electric drive is integrated into the rotary stage. The rotary stage may be provided as a preconfigured unit comprising a rotatable mount for the probe head, wherein the rotatable mount is rotatable through activation of the electric drive. Hence, the electric drive is operable to control a rotary motion of the rotatable mount and/or hence of the rotary stage.

Typically, the probe head is fastenable to the mount in a non-rotating way. Insofar, any rotation of the mount leads to a respective rotation of the probe head when appropriately fastened and fixed to the mount. Due to the at least first brake element and the respective brake mechanism provided by the at least first brake element the electric drive and/or the rotary stage can be implemented in a rather cost-efficient way. The electric drive and/or the rotary stage may comprise a comparatively low weight. The desired positional or rotational stability of the probe head can be easily reached by activating the brake mechanism, hence by transferring or moving the at least first brake element from the release position into the engaging position.

In a further example the sensor arrangement comprises a drum body pivotable or rotationally movable relative to the base with regard to the axis of rotation. The drum body comprises a cylindrical or disc-like shape and further comprises a rim. The rim comprises or forms a brake surface that is configured or operable to engage with the at least first brake element. The brake surface faces in radial direction and hence faces towards the at least first brake element. In the release position the at least first brake element is out of contact to the brake surface or it is in comparatively low friction contact to the brake surface. In the engaging position, the at least first brake element is in contact and is engaged with the brake surface to apply a braking effect onto the drum body. The at least first brake element and the brake surface may engage in different ways. They may engage frictionally or they may engage to form a positive fit. Insofar, at least one of the brake surface and the at least first brake element may comprise a brake lining or a surface profile to provide a positive fit when the at least first brake element arrives in the engaging position. Alternatively, and when frictionally implemented, the drum body comprises a friction surface to engage with a counter-friction surface of the at least first brake element.

Typically, the drum body is fastened to the rotary stage and can be hence rotated by activating the electric drive. Due to the engagement between the drum body and the at least first brake element a rotation of the drum body can be blocked. The rotational blocking of the drum body transfers to a respective blocking of the rotary stage and to the probe head because the probe head, the rotary stage and the drum body are rigidly, i.e. non-movably interconnected. A movement of one of the components, rotary stage, drum body and probe head relative to the base leads to a respective movement of any other of the components, rotary stage, drum body and probe head relative to the base.

With some examples, the drum body is connected to the rotary stage and the probe head is connected to the rotary stage via the drum body. Hence, one side of the drum body is connected to the rotary stage and another side of the drum body is connected to the probe head.

With other examples, the probe head is directly attached and connected to the rotary stage and the drum body is connected to the probe head.

With another example the probe head is detachably fastenable to the drum body or the probe head is integrally formed with or integrated into the drum body. When the probe head is detachably fastened to the drum body the drum body may be permanently engaged and fastened to the rotary stage. Then and for exchanging the probe head the connection between the probe head and the drum body has to be released and the probe head can be detached from the drum body. With other examples and when the probe head is integrally formed with or integrated into the drum body the drum body is detachably fastenable to the rotary stage. Here and for exchanging the probe head, the entirety of the drum body and the probe head has to be detached from the rotary stage. Hence, the drum body may be implemented as a portion or section of the probe head.

The rim of the drum body may be an outer rim or an inner rim. When implemented as an outer rim the surface normal of the brake surface points radially outwardly with regard to the axis of rotation. Here, the at least first brake element is configured to move radially inwardly to engage with the brake surface. When the rim is implemented as an inner rim the brake surface, hence the surface normal of the brake surface points radially inwardly. Then, the at least first brake element is configured to be moved radially outwardly to arrive in the engaging position.

In a further example the sensor arrangement comprises at least a second brake element or a respective second locking element, wherein the second brake element or the respective second locking element is movably arranged on the base or elastically deformable relative to the base between a release position and an engaging position. It is movable or deformable between the release position and the engaging position in the radial direction.

With typical examples the first brake element and the second brake element are located on diametrically opposite sides of the drum body. Having two brake elements on opposite sides of the drum body is beneficial for a mechanical force transmission across the base. Counter bearing forces that arise upon activation of the first and the second brake element may be distributed spatially homogeneously across the probe head. Typically, the first and the second brake elements are activatable simultaneously. In this way, substantially equal brake forces can be applied in radial direction onto the drum body or the probe head. This is beneficial for the rotary bearing because brake forces that are present on the probe head are introduced rather symmetrically.

Of course, with an increasing number of brake elements an increased braking effect can be provided. Moreover, with an increased number of brake elements the total braking torque applied to the probe head can be also maintained but then the braking torque provided by every individual brake element can be remarkably reduced because the individual braking torque or braking force provided by each of the individual brake elements contribute to the total braking torque. Brake elements with a reduced braking torque can be provided at lower cost and may require a reduced construction space.

The first and the second brake elements may be somewhat identical. They may be arranged symmetric on or in the base. With regard to the axis of rotation they may be arranged equidistantly as seen in a tangential direction with regard to the axis of rotation.

With a further example the at least first brake element comprises a brake shoe section configured to frictionally engage with the brake surface of the rim. The brake shoe section typically comprises a convex or concave shape and comprises a radius of curvature that corresponds to or complements with the radius of curvature of the rim of the drum body. In this way, the mutual mechanical engagement of the brake show section and of the at least first brake element can be improved. Typically, also the second brake element is provided with a corresponding brake shoe section.

The sensor arrangement and the brake mechanism are not limited to only two brake elements. There may be provided numerous brake elements that can be equidistantly arranged along the circumference of the brake surface of the drum body.

In a further example at least a first electrically operable actuator is operably connected to the at least first brake element. The at least first electrically operable actuator is configured to induce a movement or deformation of the at least first brake element in the radial direction. The at least first electrically operable actuator can be implemented in many different ways. The electrically operable actuator may comprise an electromechanical transducer operable to generate a movement or displacement of the at least first brake element in response to an electrical braking signal present to the electrically operable actuator.

With some examples the activation of the electrically operable actuator leads to a movement of the at least first brake element from the release position into the engaging position. With other implementations an activation of the electrically operable actuator leads to a movement of the at least first brake element from the engaging position into the release position. Here, the at least first brake element is per default in the engaging position and can be moved from the engaging position into the release position by an electrically driven or electrically stimulated operation of the at least first electrically operable actuator.

Typically, and when the sensor arrangement comprises at least a first and a second brake element, each of the individual brake elements is provided with an individual electrically operable actuator. Hence, also the second brake element is operably connected to a second electrically operable actuator. Here, the first and the second electrically operable actuator may be operable synchronously.

According to a further example the at least first electrically operable actuator comprises a piezo actuator comprising a stack of numerous piezo layers adjacently arranged along a stack direction. Such a piezo actuator provides a spatial dilatation or contraction dependent on a voltage applied to the piezo actuator. Typically, a piezo actuator provides a comparatively high force when driven by an appropriate electric driving signal. The total displacement of the piezo actuator may be fairly small, in the range of some micrometers or some millimeters. Typically, a maximum total displacement of the piezo actuator is smaller than 300 µm, smaller than 200 µm or smaller than 100 µm. Such a comparatively short or small movement of the first brake element and optionally also of the second brake element may be sufficient to provide a desired braking effect for the probe head.

Arranging numerous piezo layers on a stack allows to increase the total displacement achievable by the piezo actuator. A single piezo layer may induce a displacement of d. Arranging a number of n layers on top of each other along a stack direction finally leads to a piezo actuator having a maximum displacement path D = n . d.

With another example, the stack direction of the piezo actuator extends along the radial direction with regard to the axis of rotation or along a tangential direction with regard to the axis of rotation. In the first case and when the stack direction extends in radial direction, the piezo actuator is directly configured to induce a radially directed motion of the at least first brake element. However, and depending on the specific geometry of the brake element, a portion of the brake element may extend into a region located radially outside the circumference of the drum body.

It is further conceivable, that two diametrically oppositely arranged first and second brake elements comprise an abutment portion at a radial position outside the drum body. Here, both, the first and the second brake elements may comprise mutually corresponding abutment portions that face each other. Here, the electrically operable actuator, e.g. the piezo actuator may be arranged between such abutment portions to induce a radial separation or radial contraction of the first and second brake elements relative to each other.

With a further example the sensor arrangement comprises at least a first restoring element. The at least first restoring element is engaged with the at least first brake element. The first restoring element is operable to move the at least first brake element from the release position into the engaging position. With another example the first restoring element is operable to move the at least first brake element from the engaging position into the release position. Typically, the at least first restoring element is mechanically coupled to the electrically operable actuator, in particular to the piezo actuator. The at least first restoring element allows the implementation of an electrically operable actuator that is operable to generate a force or a torque in one direction only. In this way, a rather simple and cost efficient electrically operable actuator can be implemented.

With the at least first restoring element operable to move the at least first brake element from the release position into the engaging position it is ensured, that the probe head is rotationally fixed to the base even when the electrically operable actuator should be inactive or deactivated. In this way and for releasing a rotational or pivoting motion of the probe head relative to the base an activation of the electrically operable actuator will be necessary to move the at least first brake element against the restoring action of the at least first restoring element from the engaging position into the release position.

With a further example the at least first electrically operable actuator is operable to move the at least first brake element from the engaging position into the release position against a restoring force of the restoring element. Insofar, the at least first electrically operable actuator may be operably engaged with at least one of the first brake element and the restoring element. It is conceivable, that the at least first electrically operable actuator is only and exclusively mechanically engaged with the restoring element and that the at least first brake element is mechanically engaged only with the restoring element. Moreover, it is conceivable, that the at least first electrically operable actuator is mechanically engaged with the at least first brake element only and exclusively via the at least first restoring element.

In another example the restoring element comprises a flexure hinge enclosing the at least first electrically operable actuator. The flexure hinge comprises a first convex-shaped branch having a first longitudinal end and a second longitudinal end opposite to the first longitudinal end. The at least first electrically operable actuator comprises a first engaging portion and a second engaging portion. The first engaging portion is connected to or is operably engaged with the first longitudinal end of the flexure hinge. The second engaging portion is connected to or is operably engaged with the second longitudinal end of the flexure hinge.

Typically, the first and the second engaging portions may coincide with respective first and second ends of the first electrically operable actuator. When implemented as a piezo actuator, the first and the second engaging portions may be separated in the stack direction. The first engaging portion may coincide with a first end of the stack of piezo layers and the second engaging portion may correspondingly coincide with an opposite, hence a second end of the stack of piezo layers. The stack of piezo layers and hence the piezo actuator may be clamped between the first and the second longitudinal ends of the convex-shaped branch.

The convex-shaped branch comprises a crest portion that is typically located in a middle section between the first and the second longitudinal ends thereof. Due to the convex shape, the crest portion is located at a particular distance from the first electrically operable actuator. As the total length of the electrically operable actuator is subject to a change the distance between the crest portion of the first branch to the first electrically operable actuator changes accordingly.

In a further example the at least first electrically operable actuator is operable to modify a first distance between the first engaging portion and the second engaging portion in response to an electric driving signal. The first convex-shaped branch comprises a crest portion located between the first longitudinal end and the second longitudinal end. The crest portion is located at a second distance from the electrically operable actuator. The electrically operable actuator and the flexure hinge are mutually connected or engaged such that an increase of the first distance induces a decrease of the second distance.

With an expanding piezo actuator, i.e. when the piezo actuator is subject to a longitudinal dilatation along the stack direction the distance between the crest portion of the first branch and the piezo actuator is reduced. The magnitude of the modification of the crest portion's distance to the piezo actuator can be even larger than the change of the longitudinal extension of the piezo actuator. In this way, a kind of a mechanical transmission can be provided by the flexure hinge and the rather limited spatial displacement achievable by the piezo actuator can be increased.

In particular, the first convex-shaped branch enables and provides a redirection of the mechanical motion and/or force of the electrically operable actuator. As the distance between the first engaging portion and the second engaging portion of the electrically operable actuator changes thus leading to a respective change of the longitudinal elongation of the electrically operable actuator, this longitudinal displacement can be transferred into a transverse displacement of the flexure hinge. Consequently, the change of the distance between the crest portion of the first convex-shaped branch and the electrically operable actuator in the transverse direction may be in the same order of magnitude compared to the change of the distance of the electrically operable actuator in the longitudinal direction. Here, the longitudinal direction may be substantially perpendicular to the transverse direction.

With a piezo actuator the maximum achievable displacement is substantially proportional to the number of piezo layers and is therefore proportional to the total longitudinal elongation of the stack of piezo layers. With the flexure hinge the direction of the displacement can be changed, e.g. in a direction perpendicular to the elongation of the piezo stack. In this way and by means of the flexure hinge a comparatively large maximum displacement of the crest portion of the convex shaped branch in a direction perpendicular to the longitudinal elongation of the stack of piezo layers can be obtained.
With some examples a mechanical amplification can be obtained. The flexible hinge, in particular its at least first convex shaped branch may be implemented as a portion of an elliptically-shaped shell. Here, a stack direction of the piezo layers may extend along the long axis of the elliptically-shaped shell. The shell may be preloaded on may be mechanically biased and may be configured to apply a compressive restoring force onto the oppositely located engaging portions of the electrically operable actuator.

The preloaded elliptical frame may also protect the electrically operable actuator against tensile forces. It provides the user with mechanical interfaces for easy integration. This prestressing and the optional magnifying flextensionnal frame may apply an optimal preloading force to the electrically operable actuator which ensures a comparatively long life time and good performance.

The convex-shaped branch or the elliptically -shaped shell may comprise stainless steel or may be made of stainless steel.

According to a further example the flexure hinge comprises a second convex-shaped branch having a first longitudinal end and a second longitudinal end. The first convex branch and the second convex branch are located on opposite sides of the at least first electrically operable actuator, e.g. the piezo actuator. At least one of the first longitudinal ends and the second longitudinal ends of the first and the second convex-shaped branches are mutually connected or integrally formed. The convex branch may comprise a bendable or elastically deformable metal body. The first and the second branches may be integrally formed. The flexure hinge and the first and second branches thereof may comprise an oval shape and the elongated piezo actuator may extend along the long axis of the oval-shaped flexure hinge. The first and second engaging portions of the piezo actuator may coincide with longitudinal end faces of the stack of piezo layers.

In a further aspect the disclosure relates to a measurement device for measuring a surface or profile of an object. The measurement device comprises a holder for the object and a measurement probe. The measurement probe is movable relative to the holder with regard to at least one moving direction. The measurement probe is implemented as a tactile probe or as an optical probe. The tactile or optical probe is configured to scan the surface or profile of the object. For this the measurement device typically comprises at least one linear translation state or at least one rotary translation state.

The measurement device may further comprise numerous translation stages or rotary stages to provide a required relative movement of the measurement probe and the holder. The measurement device further comprises a sensor arrangement as described above which is attached to the measurement probe. Typically, the measurement probe is of elongated shape. The measurement probe comprises a first end that is connected to the measurement device. The first end of the measurement probe is supported on at least one translation or rotation stage. An opposite end, hence a second end may be implemented as a free end of the measurement probe. Typically, the sensor arrangement and the probe head are attached and connected to the second end of the measurement probe.

It should be noted, that any reference to a first object, such as a first brake element, a first electrically operable actuator, a first piezo actuator and so on equally applies to all further objects of the same type, hence to a second brake element, to a second electrically operable actuator and to a second piezo actuator.

In another aspect, the disclosure also relates to a method of measuring a surface or profile of an object. The method comprising the step of arranging the object on a holder, e.g. on a holder of a measurement device as described above. In a further method step, a probe head, e.g. a probe head of a measurement probe of the measurement device as described above, is rotated or pivoted relative to the holder and/or relative to a base of a sensor arrangement as described above. Optionally, the measurement probe of the measurement device is moved relative to the holder with regard to at least one moving direction (x, y, z). The measurement probe may be implemented as a tactile probe or as an optical probe. The tactile probe or optical probe is further configured to scan the surface of profile of the object.

The probe head is rotated relative to the holder and/or relative to the base of the sensor arrangement with regard to an axis of rotation. Thereafter and when the probe head is in one of numerous rotational states relative to the holder or relative to the base the probe head is locked against rotation by moving or elastically deforming at least a first brake element from a release position into an engaging position in a radial direction with regards to the axis of rotation.

Typically, during and/or for scanning of the surface or profile of the object the probe head is subject to a movement with regard to the at least one moving direction and/or the probe head is subject to a rotation or pivoting motion with regard to the axis of rotation.

With some examples, the method is characterized by the operation of the measurement device and/or of the sensor arrangement as described above. Hence, any features, effects and advantages as described above in connection with the sensor arrangement and/or with the measurement device equally apply to the method of measuring a surface or profile of an object; and vice versa.

### Brief description of the drawings

In the following numerous embodiments of the sensor arrangement are illustrated in greater detail by making reference to the drawings in which:
- Fig. 1: shows one example of a measurement device,
- Fig. 2: shows a measurement probe of the measurement device,
- Fig. 3: is an isolated view of a sensor arrangement as attached to the measurement probe,
- Fig. 4: shows the sensor arrangement of Fig. 3 with a probe head detached,
- Fig. 5: shows the sensor arrangement of Fig. 4 with a cover detached,
- Fig. 6: shows a further configuration of the sensor arrangement of Fig. 5 with an outer housing detached,
- Fig. 7: shows the sensor arrangement of Fig. 6 with the drum body detached,
- Fig. 8: is a top view onto the sensor arrangement of Fig. 7,
- Fig. 9: is a further top view of the drum body and the first and second brake element from above,
- Fig. 10: is an enlarged view of the brake element connected to the electrically operable actuator and the restoring element,
- Fig. 11: is an isolated perspective view of the probe head,
- Fig. 12: is a perspective view of a cross-section through the assembly of Fig. 10,
- Fig. 13: is a schematic illustration of the function principle of the piezo actuator and the restoring element in an initial configuration,
- Fig. 14: shows the arrangement of Fig. 13 with the piezo actuator in a dilatated state,
- Fig. 15: is a perspective view of the piezo actuator enclosed by a flexure hinge,
- Fig. 16: shows another example of a base of a further sensor arrangement,
- Fig. 17: shows the sensor arrangement of Fig. 16 with the actuators and the rotary stage in a perspective view and
- Fig. 18: shows the sensor arrangement of Fig. 17 in another perspective.

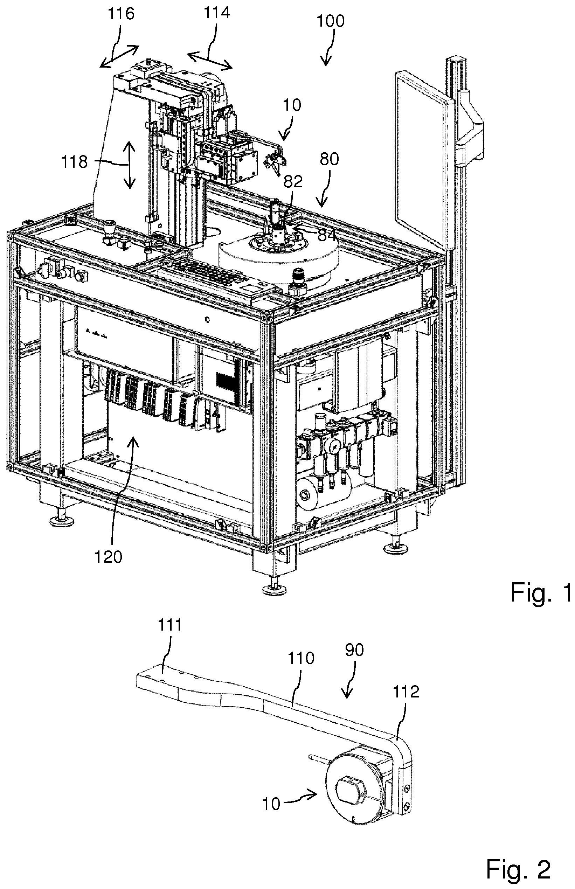

In Fig. 1 an example of a measurement device 100 is schematically illustrated. The measurement device 100 comprises a holder 80 for an object 82. The object 82 comprises a surface 84 that is measurable or quantitatively inspectable by the measurement device 100. The measurement device comprises a measurement probe 90 comprising an elongated arm or cantilever 110. The measurement probe 90 comprises a first end 111 connected to at least one translation stage 114, 116, 118. The translation stages 114, 116, 118 are schematically illustrated by double-pointed arrows in Fig. 1 to illustrate the moving direction that can be implemented with respective translation stages.

Typically, the measurement device 100 comprises at least one linear translation state. It may optionally comprise two translation stages to allow a movement of the probe 90 in at least two different directions. The measurement probe 90 may be movable in all three perpendicular directions x, y and z as indicated by the arrows 114, 116, 118. Optionally, the holder 80 may be rotatable. The measurement device 100 further comprises a controller 120. The controller is operable to conduct a scanning movement of the measurement probe 90 relative to the object 82. In addition, the controller 120 is connected to the measurement probe 90 to receive and to process measurement signals obtained and collected from a sensor arrangement 10. The sensor arrangement 10 is arranged at the cantilever 110 of the measurement probe 90. The sensor arrangement 10 is typically arranged at a free end of the cantilever 110.

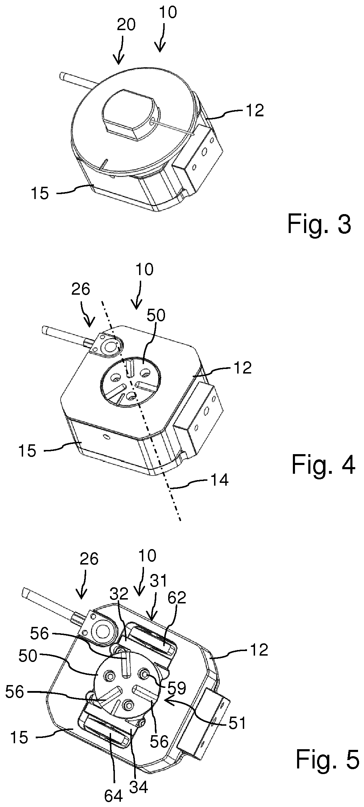

Details of the sensor arrangement 10 are described with regard to the Figs. 3-15. As illustrated in Figs. 3-5 the sensor arrangement 10 comprises a base 12 that is rigidly connectable to the cantilever 110. The base 12 is configured to detachably receive a probe head 20. The probe head 20 comprises a mount 21. The mount 21 enables a torque transmitting attachment of the probe head 20 to the base 12. The probe head 20 comprises a socket 22 protruding from a surface of the planar-shaped mount 21. On a sidewall of the socket there is attached a sensor 24. The sensor 24 can be of elongated shape. The sensor 24 may comprise a tactile probe. Alternatively, or additionally the sensor 24 may further comprise a measurement fiber. The sensor 24 may further comprise a tubular and elongated mount for optical components configured to transmit and to receive a measurement radiation.

The measurement radiation may include a collimated beam, a laser beam or a radiation from an incandescent light source. The sensor arrangement 10 may comprise an own light source or it may be coupled to a light source located elsewhere on or in the measurement device 100 in a light transmitting way, e.g. by a fiber-optic connection. The light source may comprise a superluminescent diode (SLDs). Alternatively, the light source may comprise a so-called ASE light source. Here, a light emission is generated by Amplified Spontaneous Emission (ASE). An ASE light source may comprise a rare-earth-doped optical fiber. It may comprise a rather broadband spectrum and low coherence.

The measurement radiation may propagate along the longitudinal direction of the sensor 24 or at a predefined angle relative to the sensor 24.

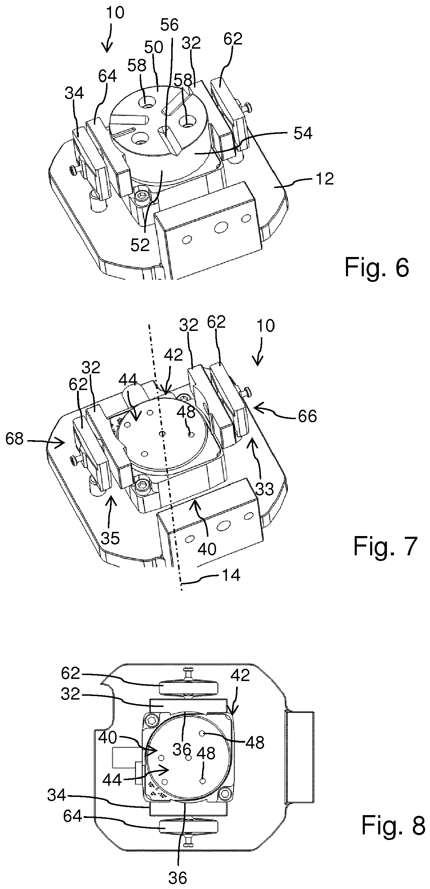

For scanning of the surface 84 of the object 82 the probe head 20 is pivot mounted or rotationally mounted on the base 12. For this the probe head 20 is detachably mounted to a rotatable drum body 50 as illustrated in Figs. 4, 5 and 6. The drum body 50 comprises a cylindrical shape. It is rotatably mounted on the base 12 with regard to an axis of rotation 14 that is schematically illustrated in Figs. 4 and 7.

The drum body 50 comprises an outer axial end face that is provided with a fastening structure 51 for releasably attaching and fastening of the probe head 20.

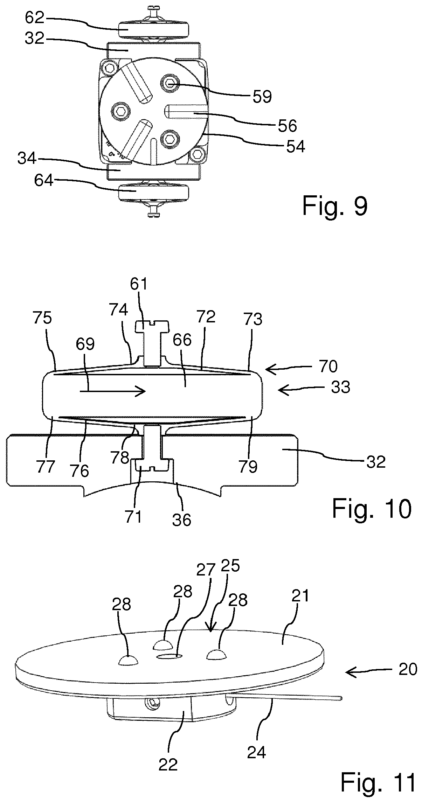

The fastening structure 51 comprises three radially extending grooves 56 in the planar outer face of the drum body 50. The grooves 56 are arranged at an angular distance of 120°. The grooves 56 match with the arrangement of a fastening structure 25 on the lower side of the mount 21 as illustrated in Fig. 11. There, the fastening structure 25 comprises numerous spherical bodies 28 that are arranged in accordance to the structure of the grooves 56.

The spherical bodies 28 are arranged at the corners of an equal sided triangle or isosceles or equilateral triangle. In this way, a kind of self centering is provided as the spherical bodies 28 engage with the numerous grooves 56 on the drum body 50. As further illustrated in Fig 11 the lower side of the mount 21 is provided with a fastener 27. The fastener 27 may comprise a permanent magnet. Correspondingly, the drum body 50 may comprise a counter-fastener. Here, the drum body 50 may be made of a ferromagnetic material or the drum body 50 may comprise a ferromagnetic material.

In an alternative embodiment, the spherical bodies 28 may be located on the corners of a isosceles and non-equilateral triangle. Then, the angular distance between the first groove and the second groove may be equal to the angular distance between the first groove and the third groove. In addition, the angular distance between the second groove and the third groove may vary from the distance between the first groove and the second groove and/or the distance between the first groove and the third groove. Then, the probe head 20 can be arranged in only one predefined orientation with regards to the orientation of the fastening structure 51 of the drum body 50. Here, the fastening structures 25, 51 mutually complement but may comprise a symmetry breaking feature.

Moreover, and as an alternative, the drum body 50 may comprise a magnetized material that magnetically interacts with the fastener 27 of the probe head 20. Typically, the sensor 24 of the probe head 20 is connected with some wires in order to enable optical and/or electrical signal transmission between the probe head 20 and the controller 120. Such wires are omitted for better illustration of the sensor arrangement 10.

As shown in Figs. 4 and 5 the sensor arrangement 10 may be provided with an additional sensor 26 located on an upper surface of the base 12. The sensor 26 may be implemented as a distance sensor. It may be configured or operable to measure the distance to the probe head 20, e.g. to the lower side of the planar-shaped mount 21. In circumstances in which the probe head 20 should mechanically collide with an object, the magnetic mount may allow for a measurable tilt of the probe head 20 relative to the base 12. This can be measured by the sensor 26 and the respective sensor signal can be used to trigger an emergency stop.

Moreover, the magnetic mount enables a rather fast, reliable and intuitive replacement and interchange of numerous probe heads 20 on the sensor arrangement 10.

The drum body 50 is rigidly attached to a rotary stage 40 as illustrated in Figs. 7 and 8. The rotary stage 40 comprises a disc-shaped support for the lower end face of the drum body 50. Insofar, the rotary stage 40 provides a mount 44 for the drum body 50. On the rotary stage 40 there are illustrated numerous fastening elements 48 that coincide or align with corresponding fastening elements 58 of the drum body 50. The fastening elements 48, 58 may be implemented as screw holes to engage with respective fastening elements 59 as illustrated in Figs. 5 and 9. The fastening elements 59 may comprise elongated screws extending through and into the mutually aligned fastening elements 58, 48. In this way, the drum body 50 can be fixed to the rotary stage 40 in a non-rotating or rotationally locked manner. Hence, the drum body 50 is rotationally locked to the rotary stage 40. The rotary stage 40 is rotatable by an electric drive 42 indicated in Fig. 7. Movement of the electric drive 42 is controllable by the controller 140 during a scanning procedure.

The sensor arrangement 10 further comprises a brake mechanism 31, that may be also denoted as a locking mechanism. The brake mechanism 31 comprises a first brake element 32 and a second brake element 34. The first brake element 32 may be also denoted as a first locking element. The second brake element 34 may be also denoted as a second locking element. The brake elements 32, 34 are located radially outside the drum body 50. They are facing towards an outer rim 52 of the drum body. Each one of the brake elements 32, 34 comprises a brake shoe section 36. The brake shoe section 36 is concave-shaped and comprises a radius of curvature that matches the radius of curvature of the outer rim 52 of the drum body. The outer rim 52 comprises a brake surface 54 facing towards the brake shoe sections 36 of the brake elements 32, 34.

The brake mechanism 31 is operable to block or to impede a rotation of the probe head 20 relative to the base 12. For this, the brake mechanism 31 is rigidly fastened to the base 12. The individual brake elements 32, 34, hence the first and the second brake elements 32, 34 are displaceable in radial direction with regard to the axis or rotation 14. In Fig. 9, an engaging position of the first and the second brake elements 32, 34 with regard to the drum body 50 is illustrated. Here, the brake shoe section 36 of the first and the second brake elements 32, 34 is in frictional engagement with the brake surface 54 of the drum body 50. As it is apparent from Figs. 6-9 the first and second brake elements 32, 34 are located on diametrically opposite sides of the drum body 50. In this way, when activated or moved radially inwardly simultaneously, a rather homogeneous brake force can be applied to the drum body 50 without applying a net radial force on the drum body 50.

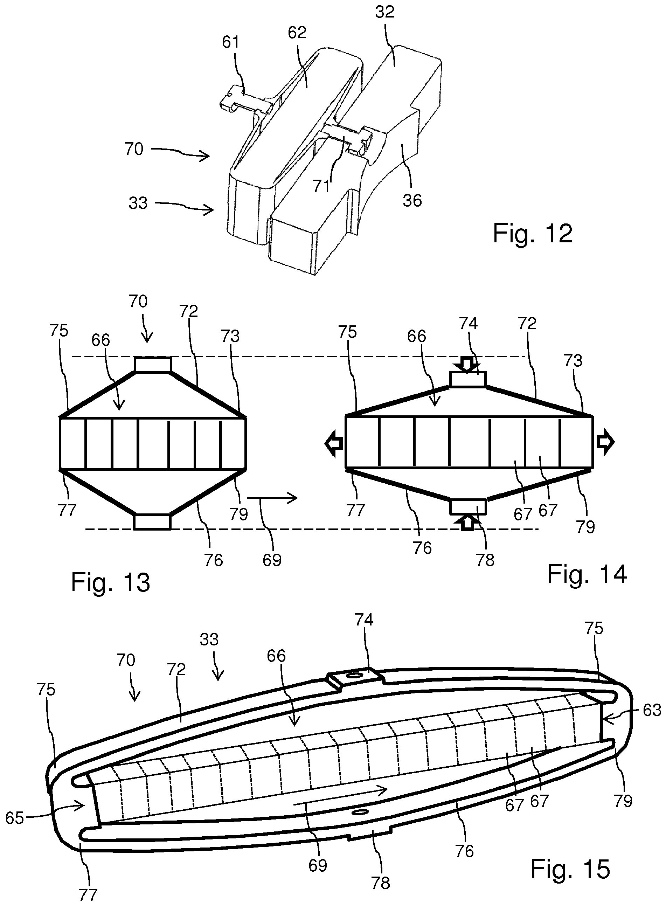

The movement of the first and second brake elements 32, 34 in radial direction is provided by respective electrically operable actuators 62, 64 as illustrated in Figs. 6 and 7. The electrically operable actuators 62, 64 are implemented as piezo actuators 66, 68. Each one of the piezo actuators 66 comprises a stack of piezo layers 67 as schematically illustrated in Figs. 13-15. The illustration of Fig. 15 shows the working principle of a piezo actuator 66 in more detail. The piezo actuator 66 is engaged with a flexure hinge 70. The flexure hinge 70 comprises a first branch 72 and a second branch 76.

The two branches 72, 76 extend on opposite sides of the piezo actuator 66. The first branch 72 comprises a first end 73 and an opposite end 75. The first branch 72 comprises a convex-shaped branch. A middle section and hence a crest portion 74 of the first branch 72 is located at a given distance from the piezo actuator 66 while the opposite longitudinal ends 73, 75 are connected to the piezo actuator 66.

The first branch 72 is integrally formed with the second branch 76. The first and second branches 72, 76 are substantially symmetrically-shaped. The second branch 76 comprises a first end 77 and a second longitudinal end 79. The second end 79 is integrally formed with the first end 73. The second end 75 is integrally formed with the first end 77. The second branch 76 comprises a crest portion 78 located substantially midway between the first and the second longitudinal ends 77, 79 of the second branch 76. The first and second ends of the branches 72, 76 are separated from each other along the stack direction 69 of the stack of piezo layers 67.

When the piezo actuator 66 is driven by an appropriate electrical signal its total elongation along the stack direction 69 will increase. This increase leads to a contraction and to a decrease of the distance of the crest portions 74, 78 relative to each other as well as relative to the piezo actuator. This is schematically illustrated in Fig. 14. Compared to an initial or unbiased configuration of Fig. 13 a dilatation or expansion of the piezo actuator 66 along the stack direction 69 leads to a contraction of the crests 74, 78 of the flexure hinge 70.

The degree of spatial expansion of the piezo actuator 66 in or along the stack direction 69 may be smaller than the resulting contraction of the crest portions 74, 78 of the two branches 72, 76 relative to each other. In this way, a mechanical transmission can be provided and the limited maximum displacement or expansion of the piezo actuator 66 can be effectively amplified.

With the present example, the crest portion 78 of the second branch 76 is connectable or is connected to the first brake element 32. The crest portion 74 of the first branch is connectable to the base 12, in particular to a sidewall section of the housing 15 of the base 12.

As illustrated in Figs. 10 and 12 suitable fastening elements 61, 71, e.g. implemented as screws, are used to fasten the crest portions 74, 78 to the brake element 32 and to the housing 15, respectively.

The flexure hinge 70 is an example of a restoring element 33 configured to urge the brake element 32 in one of the engaging position and the release position. In the present example, the restoring element 33 is operable to urge the first brake element 32 in and towards the engaging position, hence radially inwardly so that the first brake element 32 is frictionally engaged with the brake surface 54 of the drum body 50. Likewise, the second brake element 34 is equipped or is mechanically engaged with a correspondingly configured and correspondingly-shaped restoring element 35.

Even though not particularly illustrated the brake elements 32, 34 can be slidably arranged in a correspondingly-shaped receptacle of the housing 15 of the base 12. In this way, the brake elements 32, 34 and the restoring elements 33, 35 as well as the actuators 62, 64 can be secured and supported in axial direction with regard to the axis of rotation 14. The brake element 32 can be restraint guided in the receptacle of the housing 15, wherein the restraint guiding provides a movement in radial direction.

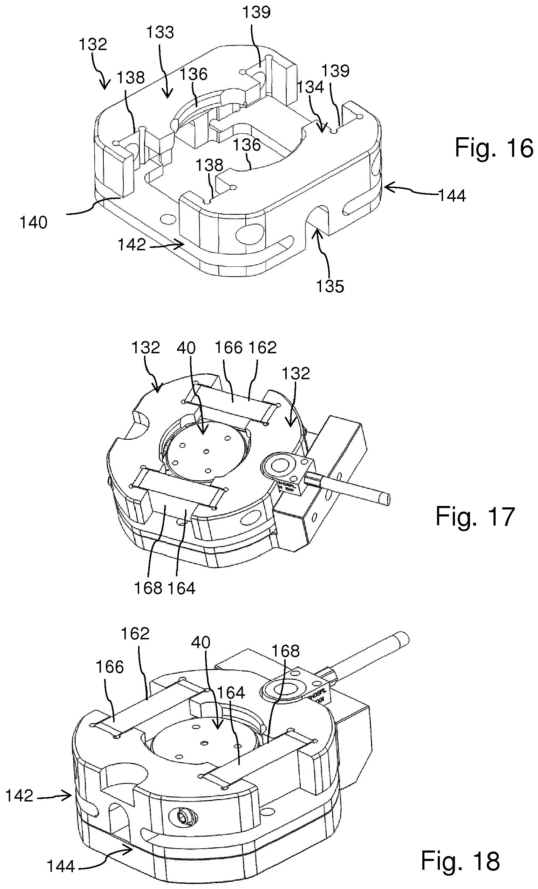

In Figs. 16-18 another example of a sensor arrangement 10 is illustrated. The working principle of the rotary state, the arrangement of a drum body 50 and the fastening of the probe head 20 to the drum body is equivalent or identical to the example as described above. Here, first and second brake elements 132, 134 are integrally formed with the base 112. The base 112 as illustrated in Fig. 16 comprises a first brake element 132 with a brake shoe section 136 and a second brake element 134 with a respective brake shoe section 136. The brake elements 132, 134 are symmetrically-shaped and face towards each other with their respective brake shoe sections 136.

Next to and radially outwardly to the brake shoe sections each one of the brake elements 132, 134 comprises an abutment portion 138, 139. Here, each one of the brake elements 132, 134 comprises a first abutment portion 138 and a second abutment portion 139. The abutment portions 138, 139 are located on opposite sides of the brake shoe section 136. The second brake element 138 comprises correspondingly arranged abutment portions 138, 139. These abutment portions serve to engage with longitudinal end faces of correspondingly-shaped electrically operable actuators 162, 164 as illustrated in Figs. 17 and 18.

Here, the actuators 162, 164 fill a gap space between oppositely located first abutment portions 138 of the first and second brake elements 132, 134 and the gap between the second abutment portions 139 of the first and the second brake elements 132, 134. The actuators 162, 164 are configured to contract or to expand along their longitudinal extension. In this way, a distance between the first and second brake elements 132, 134 can be modified. Typically, the first and second electrically operable actuators 162, 164 are implemented as piezo actuators 166, 168. When appropriately driven by an electric driving signal the longitudinal extension of the piezo actuators 166, 168 increases thus leading to an increase of the distance between the first and second brake elements 132, 134 and to a respective increase of the distance between the brake shoe sections 136 of the first and the second brake elements 132, 134.

The body 112 comprises a respective elasticity and/or the integration or the mechanical link between the brake elements 132, 134 with a base plate 140 of the base 112 is such, that the brake elements 132, 134 and/or their connection to the base plate is or are allowed to flex or to elastically deform to such a degree, that a braking effect of the brake shoe sections 136 on the brake surface 54 of the drum body 50 is effectively attenuated, released or amplified.

Insofar, the restoring elements 133, 135 are integrated into the base 112. In order to provide a desired elastic deformation behavior between the base plate 140 and the first and second brake elements 132, 134 there may be provided at least one lateral slit 142 between the base plate 140 and the brake elements 132, 134. Typically, there may be provided two slits, namely a first slit 142 and a second slit 144 by way of which the size and/or the dimensions of the integral connection between the brake elements 132, 134 and the base plate 140 can be reduced. In this way, a well-defined elastic deformation behavior or bending effect of the first and second brake elements 132, 134 can be provided.

### Reference Numbers

- 10: sensor arrangement
- 12: base
- 14: axis of rotation
- 15: housing
- 16: cover
- 20: probe head
- 21: mount
- 22: socket
- 24: sensor
- 25: fastening structure
- 26: sensor
- 27: fastener
- 28: spherical body
- 31: brake mechanism
- 32: brake element
- 33: restoring element
- 34: brake element
- 35: restoring element
- 36: brake shoe section
- 40: rotary stage
- 42: electric drive
- 44: mount
- 48: fastening element
- 50: drum body
- 51: fastening structure
- 52: rim
- 54: brake surface
- 56: groove
- 58: fastening element
- 59: fastening element
- 61: fastening element
- 62: actuator
- 63: engaging portion
- 64: actuator
- 65: engaging portion
- 66: piezo actuator
- 68: piezo actuator
- 67: piezo layer
- 69: stack direction
- 70: flexure hinge
- 71: fastening element
- 72: branch
- 73: longitudinal end
- 74: crest portion
- 75: longitudinal end
- 76: branch
- 77: longitudinal end
- 78: crest portion
- 79: longitudinal end
- 80: holder
- 82: object
- 84: surface
- 90: measurement probe
- 100: measurement device
- 110: arm
- 111: end section
- 112: end section
- 114: translation stage
- 116: translation stage
- 118: translation stage
- 120: controller
- 132: brake element
- 133: restoring element
- 134: brake element
- 135: restoring element
- 136: brake shoe section
- 138: abutment portion
- 139: abutment portion
- 140: base plate
- 142: slit
- 144: slit
- 162: actuator
- 164: actuator
- 166: piezo actuator
- 168: piezo actuator

## Claims

1. A sensor arrangement (10) for measuring a surface or profile of an object (82), the sensor arrangement comprising:
- a base (12; 112) defining an axis of rotation (14),
- a probe head (20) attachable to the base (12; 112) or attached to the base (12; 112), wherein the probe head (20) is pivotable or rotationally movable relative to the base (12; 112) with regard to the axis of rotation (14),
- at least a first brake element (32, 34; 132, 134) movably arranged on the base (12; 112) or elastically deformable relative to the base (12; 112) between a release position and an engaging position, wherein when in the engaging position the brake element (32, 34; 132, 134) is engaged with the probe head (20) to block a rotation of the probe head (20) relative to the base (12; 112) and wherein the at least first brake element (32, 34; 132, 134) is movable or deformable between the release position and the engaging position in a radial direction with regards to the axis of rotation (14).

2. The sensor arrangement of claim 1, wherein the base (12; 112) comprises an electric drive (42) and a rotary stage (40), the rotary stage (40) comprising a mount (44) for the probe head (20) wherein the electric drive (42) is operably connected to the rotary stage (40) and is configured to rotate the rotary stage (40) relative to the base (12; 112).

3. The sensor arrangement according to any one of the preceding claims, further comprising a drum body (50) pivotable or rotationally movable relative to the base (12; 112) with regard to the axis of rotation (14), wherein the drum body (50) comprises a cylindrical or disc like shape and comprises a rim (52) comprising or forming a brake surface (54) configured to engage with the at least first brake element (32, 34; 132, 134).

4. The sensor arrangement according to claim 3, wherein the probe head (20) is detachably fastenable to the drum body (50) or wherein the probe head (20) is integrally formed with or integrated into the drum body (50).

5. The sensor arrangement according to claim 3 or 4, further comprising at least a second brake element (34; 134) movably arranged on the base (12; 112) or elastically deformable relative to the base (12; 112) between a release position and an engaging position and being movable or deformable between the release position and the engaging position in the radial direction, wherein the first brake element (32; 132) and the second brake element (34; 134) are located on diametrically opposite sides of the drum body (50).

6. The sensor arrangement according to any one of the preceding claims, further comprising at least a first electrically operable actuator (62, 64; 162, 164) operably connected to the at least first brake element (32, 34; 132, 134), wherein the at least first electrically operable actuator (62, 64; 162, 164) is configured to induce a movement or deformation of the at least first brake element (32, 34; 132, 134) in the radial direction.

7. The sensor arrangement according to claim 6, wherein the at least first electrically operable actuator (62, 64; 162, 164) comprises a piezo actuator (66, 68) comprising a stack of numerous piezo layers (67) adjacently arranged along a stack direction (69).

8. The sensor arrangement according to claim 7, wherein the stack direction (69) extends along the radial direction or along a tangential direction with regard to the axis of rotation (14).

9. The sensor arrangement according to any one of the preceding claims further comprising at least a first restoring element (33, 35; 133, 135), the at least first restoring element (33, 35; 133, 135) being engaged with the at least first brake element (32, 34; 132, 134) and being operable to move the at least first brake element (32, 34; 132, 134) from the release position into the engaging position.

10. The sensor arrangement according to claim 9, wherein the at least first electrically operable actuator (62, 64; 162, 164) is operable to move the at least first brake element (32, 34; 132, 134) from the engaging position into the release position against a restoring force of the restoring element (33, 35; 133, 135).

11. The sensor arrangement according to claim 6 and any one of the claims 9 or 10, wherein the restoring element (33, 35) comprises a flexure hinge (70) enclosing the at least first electrically operable actuator (62, 64; 162, 164), wherein the flexure hinge (70) comprises a first convex shaped branch (72) having a first longitudinal end (73) and a second longitudinal end (75) opposite to the first longitudinal end (73), wherein the at least first electrically operable actuator comprises a first engaging portion (63) and a second engaging portion (65), wherein the first engaging portion (63) is connected to or operably engaged with the first longitudinal end (73) and wherein the second engaging portion (65) is connected to or operably engaged with the second longitudinal end (75).

12. The sensor arrangement according to claim 11, wherein the at least first electrically operable actuator (62, 64; 162, 164) is operable to modify a first distance between the first engaging portion (63) and the second engaging portion (65) in response to an electric driving signal and wherein the first convex shaped branch (72) comprises a crest portion (74) located between the first longitudinal end (73 and the second longitudinal end (75) and located at a second distance from the electrically operable actuator (62, 64; 162, 164), wherein the electrically operable actuator (62, 64; 162, 164) and the flexure hinge (70) are mutually connected or engaged such that an increase of the first distance induces a decrease of the second distance.

13. The sensor arrangement according to claim 11 or 12, wherein the flexure hinge (70) comprises a second convex shaped branch (76) having a first longitudinal end (77) and a second longitudinal end (79) and wherein the first convex shaped branch (72) and the second convex shape branch (76) are located on opposite sides of the at least first electrically operable actuator (62, 64) and wherein at least one of first longitudinal ends (73, 77) and the second longitudinal ends (75, 79) of the first and the second convex shaped branches (72, 76) are mutually connected or integrally formed.

14. A measurement device (100) for measuring a surface or profile of an object (82), the measurement device comprising:
- a holder (80) for the object (82),
- a measurement probe (90) movable relative to the holder (80) with regard to at least one moving direction (x, y, z), wherein the measurement probe (90) is implemented as a tactile probe or as an optical probe, the tactile probe or optical probe being configured to scan the surface or profile of the object (82),
- a sensor arrangement (10) according to any one of the preceding claims attached to the measurement probe (90).

15. The method of measuring a surface or profile of an object (32), the method comprising the steps of:
- arranging the object (32) on a holder (80),
- rotating or pivoting a probe head (20) relative to the holder (80) with regard to an axis of rotation (14),
- locking the probe head (20) in at least one of numerous rotational states by moving or elastically deforming at least a first brake element (32, 34; 132, 134) from a release position into an engaging position in a radial direction with regards to the axis of rotation (14).
